# EUROPEAN PATENT SPECIFICATION

(11) **EP 0 533 429 B1**
(45) Date of publication and mention of the grant of the patent: **23.02.2000**
(21) Application number: 92308372.9
(22) Date of filing: 15.09.1992
(51) Int. Cl.: G06F 13/362

(54) **Computer bus control system**
Rechnerbussteuerungssystem
Système de commande de bus d'ordinateur

(30) Priority: 16.09.1991 US 760786; 17.09.1991 US 761083
(43) Date of publication of application: 24.03.1993
(73) Proprietor: INTEL CORPORATION, Santa Clara, CA 95054 (US)
(72) Inventor: Heil, Thomas, Easley, SC 29640 (US); McDonald, Edward A., Lexington, SC 29072 (US); Young, Gene F., Lexington, SC 29072 (US); Walrath, Craig A., Easley, SC 29642 (US); Ottinger, James M., Columbia SC 29210 (US); Miller, Marti D., Hudson, WI 54016 (US)
(74) Representative: Wombwell, Francis

(56) References cited:
- EP-A- 0 184 657
- US-A- 4 868 741

## Description

This invention relates to computer systems.

Traditionally, computer systems have included a central processing unit or CPU, data storage devices including a main memory which is used by the CPU for performance of its operations and a system bus which interconnects the CPU to the main memory and any other data storage devices, I/O devices also are connected to a system via the bus. The bus thus serves a communications link among the various devices making up a computer system by carrying clock and other command signals and data signals among the devices. Deadlock prevention in arbitration between a plurality of requesting devices for a shared resource is known inter alia from EP-A-0 184 657.

To expand the operating speed and capacity, computer systems including multiple processors and/or multiple system buses have been developed. Additional expansion is possible by the use of subsystem I/O buses which typically are coupled to the system bus or buses to connect additional devices or agents to the computer system. These additional resources can be used by the computer system and thereby expand the processing capabilities of the system. The addition of a subsystem I/O bus is advantageous since it presents only one load for the system bus or buses yet provides system access to a number of agents. If the agents are directly coupled to the system bus, they load the system bus with a load per device, such as eight or sixteen bus loads as opposed to the single bus load presented by the subsystem I/O bus.

It is an object of the present invention to provide a method and apparatus for increasing performance in a computer system.

Therefore according to one aspect of the present invention, there is provided a method of optimizing use of a common bus connecting a plurality of bus masters with a shared resource, comprising sensing the availability of said shared resource, generating a retry signal when a first one of said plurality of bus masters requests access to said shared resource while said shared resource is unavailable, providing said retry signal to said first bus master when said shared resource is unavailable thereby causing the requesting bus master to relinquish control of said common bus, providing a bus arbiter adapted to control bus master access to said common bus, identifying, to said arbiter, said first bus master seeking access to said shared resource, generating a busy signal when said shared resource is sensed as unavailable and providing said busy signal to said bus arbiter, and barring, by way of said arbiter, said first bus master from participating in arbitration for control of said common bus when said shared resource is unavailable.

According to another aspect of the present invention, there is provided a computer system, including a plurality of bus masters connected to a common bus, a bus arbiter adapted to control bus master access to said common bus and a shared resource coupled to said common bus, characterized in that said shared resource includes logic means adapted to generate a busy signal when said shared resource is unavailable, the busy signal so generated being provided to said bus arbiter, and in that said bus arbiter is adapted to prevent bus masters seeking access to said shared resource from participating in arbitration for control of said common bus during receipt of said busy signal and wherein said logic means is further adapted to generate a retry signal when said shared resource is addressed by bus master when said shared resource is in a busy state, said retry signal being effective to cause said bus master to relinquish control of said common bus.

One embodiment of the present invention will now be described by way of example, with reference to the accompanying drawings, in which:-
Figure 1 is a block diagram representation of a scalable system architecture for a computer system:
Figures 2A and 2B provide a block diagram representation of the addressing and arbitration logic included within Micro Channel interface module 28 of Figure 1; and
Figure 3 is a timing diagram for a retry scheme in accordance with the present invention.

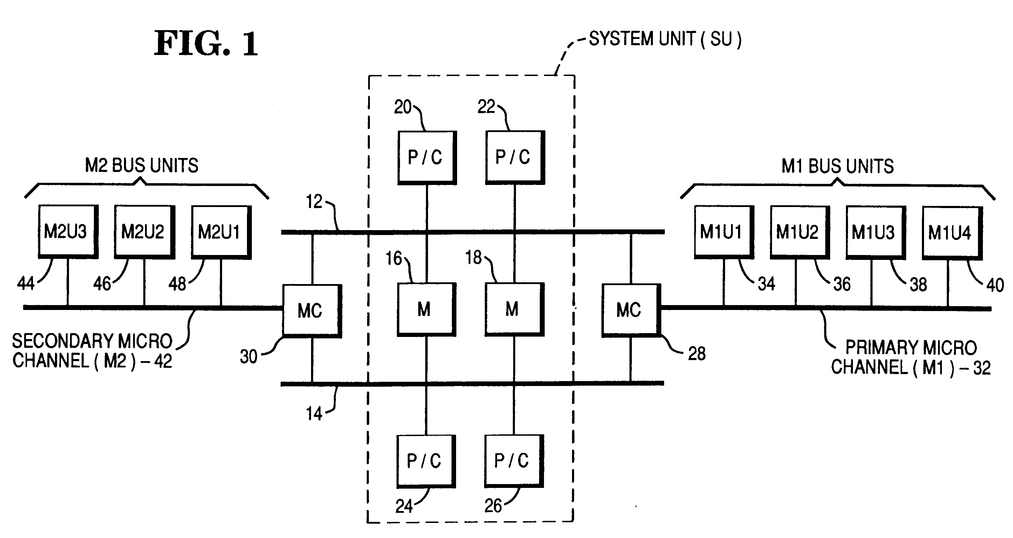

One implementation of a scalable system architecture for a computer system is shown in the simple block diagram of Figure 1. As implemented, the architecture comprises dual system busses 12 and 14, two dual-ported system memory modules 16 and 18 connected between the two system busses, two processor modules 20 and 22 connected to bus 12, and two processor modules 24 and 26 connected to system bus 16. Also connected between the system busses are Micro Channel interface modules 28 and 30.

Micro Channel interface module 28 provides connection between system busses 12 and 14 and primary Micro Channel I/O bus 32. Connected to bus 32 are various Micro Channel bus masters 34, 36, 38 and 40. Interface module 30 provides connection between system busses 12 and 14 and bus masters 44, 46, 48 residing on secondary Micro Channel I/O bus 42. Arbitration systems are employed to coordinate the use of system busses 12 and 14 and I/O busses 32 and 42. For example, when a system bus master, such as processor 22, seeks write access to Micro Channel bus unit 36 on I/O bus 32, it must first arbitrate for use of system bus 12. Upon gaining control of bus 12, interface module 28 must then arbitrate for use of I/O bus 32. If I/O bus 32 is available, the request by processor 22 is services immediately.

During normal operation however, there will be times when I/O bus 32 is unavailable or "busy". For example, I/O bus 32 will be unavailable when (1) the bus is owned by one of bus units 34, 36, 38 or 40; (2) an access by a processor on system bus 14 to a bus unit residing on I/O bus 32 is being serviced: (3) a processor on system bus 14 is executing a locked sequence of cycles to an I/O bus 32 bus unit (semaphore operation); or (4) interface module 28 is servicing a previously posted (buffered) write to an I/O bus 32 bus unit by a processor on either system bus 12 or 14.

The discussion which follows refers to the structure and operation of MC interface module 28 and MC I/O bus 32. The construction and operation of MC interface module 30 and MC I/O bus 42 are identical to module 28 and bus 32, respectively.

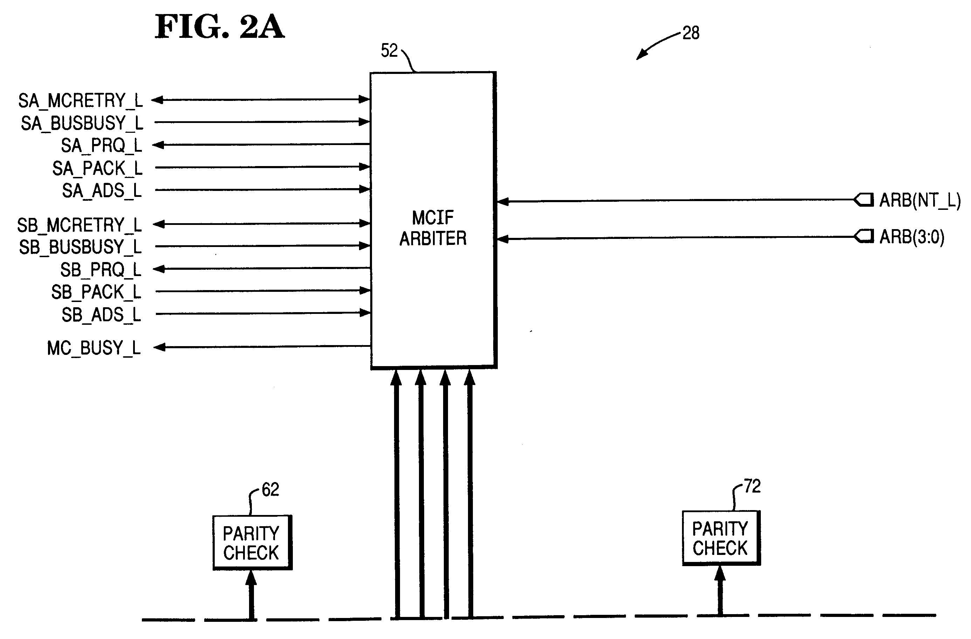

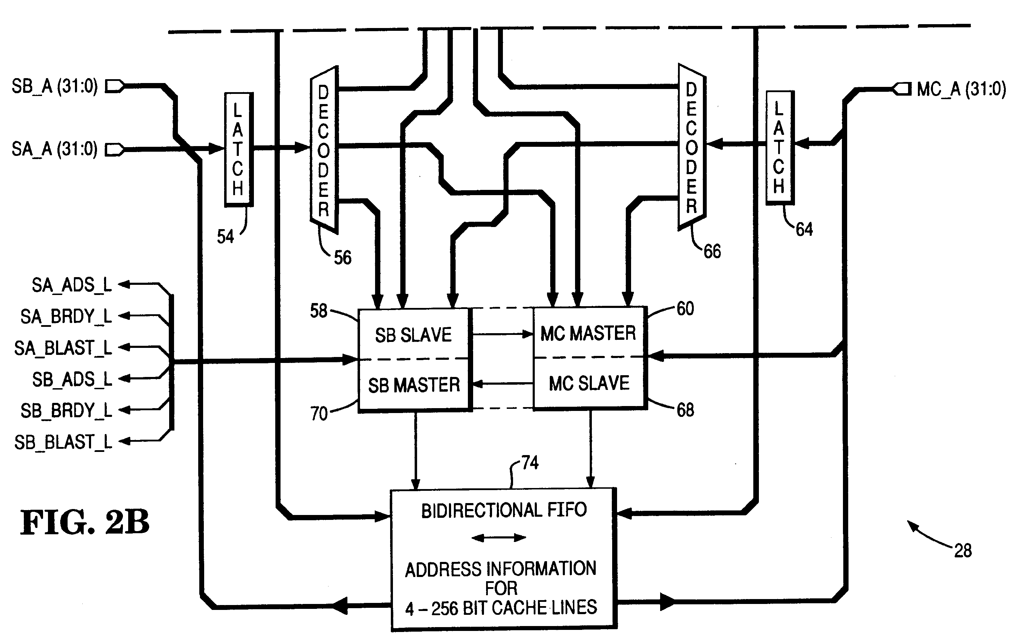

A block diagram representation of the addressing and arbitration logic included within Micro Channel (MC) interface module 28 is shown in Figures 2A and 2B. The interface module includes logic in addition to what is shown in Figures 2A and 2B which has been omitted to simplify the present discussion. The omitted logic is not necessary for an understanding of the present invention.

The logic blocks shown in Figures 2A and 2B include an arbiter 52 (MCIF arbiter) which senses and drives MC I/O bus 32 arbitration signals ARB(3:0) and senses arbitration/grant indicator signal ARBGNT_L. The MCIF arbiter must arbitrate for control of I/O bus 32 on behalf of a system bus master during requesting for access to the I/O bus. MCIF arbiter 52 also conducts system bus arbitration and cycle generation on behalf of MC bus masters requesting access to system resources.

Logic elements utilized during system bus initiated cycles propagated to the MC I/O bus include latch 54 which is used to latch address, address parity and bus operation signals received from system bus 12, i.e. signals SB_A(31:0), or system bus 14, i. e signals SB_B(31:0). The output of latch 54 is provided to a decoder 56 which detects whether or not the current cycle is directed to the MC I/O bus and generates start and decoded address signals for system bus slave module 58.

System bus slave module 58 controls the multiplexing of system bus address information to I/O bus 32, coordinates system bus data transfer activities, and controls the starting of MC bus master module 60. Upon receiving a start signal from module 58, MC bus master module 60 generates cycles on MC I/O bus 32 in accordance with the Micro Channel Architecture specification and coordinates MC I/O bus data transfer activities.

Logic elements utilized during MC I/O bus initiated cycles propagated to the system bus include latch 64, decoder 66, MC slave module 68, SB master module 70, and address FIFO 74. When MC interface module 28 is a slave on MC I/O bus 32, MC address MC_A(31:0) is held within latch 64 to be propagated to decoder 66. Decoder 66 is responsible for decoding of MC cycles directed to the system busses and determining whether the system bus directed cycles are to be decoupled to allow write posting and read-ahead address information into address FIFO 74.

MC bus slave module 68 senses the MC bus signals received from decoder 66 to latch the current address, initiate propagation of the MC cycle to a selected system bus and coordinate MC I/O bus data transfer activity.

The system bus master module requests a system bus on behalf of a MC bus master and controls the system signals when MC interface module 28 is a system bus master on either one of system busses 12 or 14. System bus master module 70 communicates with address FIFO 74 and coordinates system bus transfer activities.

Interface module 28 provides buffering and decoupling between the system busses and the I/O bus 32. Buffering at the interface module boosts total system bandwidth by allowing bus masters on both the system busses and I/O bus 32 to concurrently operate at their peak rates.

Decoupling the system busses from the Micro Channel I/O busses allows higher performance on all busses and concurrency between busses. Each bus operates independently to conduct transactions between bus units residing on the bus. Connections between the busses are made only when a bus master on one bus requires access to a resource residing on another bus, such as when processor 22 requests access to MC bus unit 36, or when a bus unit residing on I/O bus 32 requests access to system memory.

To prevent deadlock on either system bus when a bus master on the system bus requests access to a bus unit on a busy I/O bus 32, interface module 28 includes logic for generating a retry signal which causes the requesting bus master to release the system bus and arbitrate for control of the system and I/O buses again when I/O bus 32 is available.

Arbitration for the system bus is controlled by a system bus arbiter (not shown). Listed below are some of the signals driven by the system bus arbiter, the MC interface and other bus units residing on the system bus to coordinate use of the system bus.

| Signal | Description |
|---|---|
| ADS_L | Address Strobe - Indicates the start of a bus cycle. |
| BRDY_L | Burst Ready - On read cycles, driven by the current system bus slave to indicate it has driven valid read data onto the system bus. On write cycles, driven by the slave to end the current cycle. |
| BLAST_L | Burst Last - Activated by a master to indicate to a slave the end of a burst bus sequence. |
| BUSBUSY_L | Bus Busy - Driven by the system bus arbiter to indicate the system bus is in use. |
| PRQ_L | Driven low by a bus master or the MC interface to request ownership of the system bus. |
| PACK_L | Driven low by the system bus arbiter to indicate to a bus master that its request for the system bus has been granted. |

Figures 2A and 2B show each of the above-described active-low signals in duplicate, preceeded by the nomenclature SA_ or SB_. Signals preceeded by SA_ are associated with system bus 12 while signals beginning with SB_ are associated with system bus 14. To prevent deadlock on the system bus, interface module 28 generates retry signals SA_MCRETRY_L and SB_MCRETRY_L and a Micro Channel bus busy signal MC_BUSY_L, as desribed below.

| Signal | Description |
|---|---|
| SA_MCRETRY_L | Micro Channel Interface Retry -Driven by the MC Interface to terminate a cycle attempted to a busy MC I/O bus. |
| SB_MCRETRY_L | Micro Channel Interface Retry -Driven by the MC Interface to terminate a cycle attempted to a busy MC I/O bus. |
| MC_BUSY_L | Micro Channel Bus Busy - Driven by the MC interface to indicate that the MC bus is not available for new bus master ownership. |

The applicable MCRETRY_L signal is driven low by the MC interface if a system bus master requests access to the MC I/O bus when in a busy state. In response to this signal, the requesting system bus master will release the system bus and re-arbitrate for the system bus until access is granted by the system bus arbiter. Upon sensing of an active MCRETRY_L signal, the system bus arbiter will not allow the system bus master requesting ownership of the MC I/O bus to gain control of the system bus until the MC interface has signaled the system bus arbiter that the MC I/O bus is available by driving the MC_BUSY_L signal high. MC_BUSY_L is driven low by the MC interface when the MC I/O bus is not available for new bus master ownership.

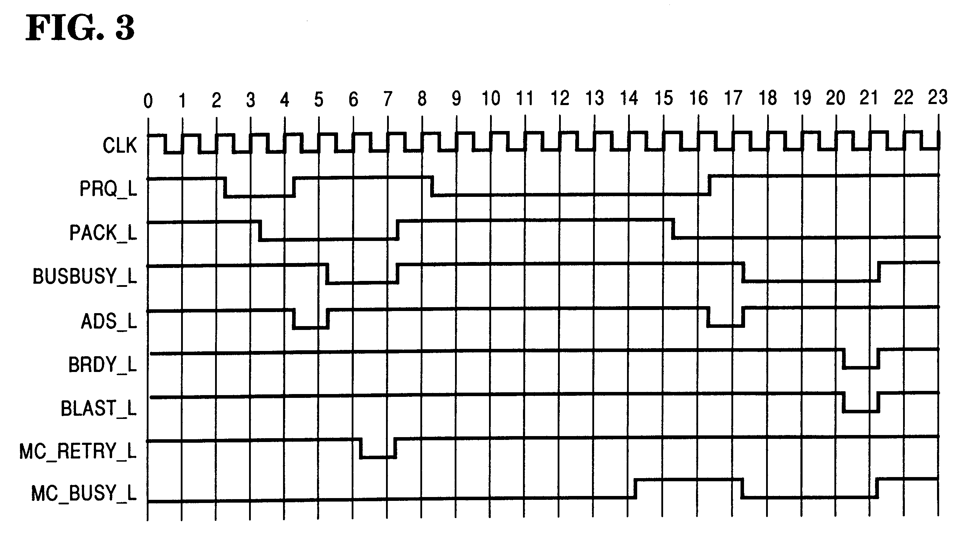

Figure 3 provides an example timing diagram illustrating the sequence of events which occur when processor 22 seeks access to an unavailable I/O bus 32. The initial state of MC_BUSY_L is low indicating that MC I/O bus 32 is not available for new bus master ownership. The timing for the retry sequence shown in Figure 3 is set forth below.

| | |
|---|---|
| Clock 2-3 | Processor 22 arbitrates for system bus 12. PRQ_L driven low by processor 22 to request system bus. PACK_L driven low by system bus arbiter granting bus ownership to processor 22. |
| Clock 4 | Processor 22 addresses MC interface 28. |
| Clock 6 | Instead of BRDY_L, MC interface 28 asserts SA_MCRETRY_L. |
| Clock 7 | Processor 22 detects SA_MCRETRY_L and releases bus 12. |
| Clock 8 | Processor 22 again requests control of bus 12. |
| Clock 9-13 | The system bus arbiter ignores the request by processor 22 for bus 12. The arbiter knows through receipt of signal SA_MCRETRY_L that processor 22 will address interface 28 if given control of bus 12. Processor 20 and interface modules 28 and 30 are permitted control of bus 12 for access to memory modules 16 and 18 or other devices residing on the bus. |
| Clock 14 | I/O bus 32 is no longer busy. Interface 28 negates (drives high) signal MC_BUSY_L. |
| Clock 15 | The system bus arbiter detects MC_BUSY_L, and asserts PACK_L. |
| Clock 16-20 | Processor 22 successfully accesses interface 28. |

It can thus be seen that there has been provided by the preferred embodiment a simple solution for eliminating deadlock on a first bus containing transactions directed to a second, unavailable, bus.

## Claims

1. A method of optimizing use of a common bus (12) connecting a plurality of bus masters (20, 22) with a shared resource (28, 32), comprising sensing the availability of said shared resource (28,32), generating a retry signal when a first one of said plurality of bus masters (20, 22) requests access to said shared resource (28, 32) while said shared resource is unavailable, providing said retry signal to said first bus master (20, 22) when said shared resource (28, 32) is unavailable thereby causing the requesting bus master (20, 22) to relinquish control of said common bus, providing a bus arbiter adapted to control bus master access to said common bus (12), identifying, to said arbiter, said first bus master (20, 22) seeking access to said shared resource, generating a busy signal when said shared resource (28, 32) is sensed as unavailable and providing said busy signal to said bus arbiter, and barring, by way of said arbiter, said first bus master (20, 22) from participating in arbitration for control of said common bus (12) when said shared resource is unavailable.

2. A method according to Claim 1, further including the step of enabling said first bus master (20, 22) to obtain control of said common bus (12) upon expiration of said busy signal.

3. A computer system, including a plurality of bus masters (20, 22) connected to a common bus (12), a bus arbiter adapted to control bus master access to said common bus 12 and a shared resource (28, 32) coupled to said common bus, characterized in that said shared resource (28, 32) includes logic means (52) adapted to generate a busy signal when said shared resource (28, 32) is unavailable, the busy signal so generated being provided to said bus arbiter, and in that said bus arbiter is adapted to prevent bus masters (20, 22) seeking access to said shared resource (28, 32) from participating in arbitration for control of said common bus (12) during receipt of said busy signal and wherein said logic means (52) is further adapted to generate a retry signal when said shared resource (28, 32) is addressed by bus master (20, 22) when said shared resource (28, 32) is in a busy state, said retry signal being effective to cause said bus master (20, 22) to relinquish control of said common bus.

4. A computer system according to Claim 3, wherein the said shared resource includes an interface circuit (28) coupled to a further bus (32).

## Patentansprüche

1. Ein Verfahren zur Optimierung der Verwendung eines gemeinsamen Busses (12), der eine Mehrzahl von Bus-Mastern (20, 22) mit einer geteilten Ressource (28, 32) verbindet, umfassend das Erfassen der Verfügbarkeit der geteilten Ressource (28, 32), das Erzeugeneines Neuversuchssignals, wenn ein erster der Mehrzahl von Bus-Mastern (20, 22) den Zugriff auf die geteilte Ressource (28, 32) anfordert, während die geteilte Ressource nicht verfügbar ist, das Liefern des Neuversuchssignals an den ersten Bus-Master (20, 22), wenn die geteilte Ressource (28, 32) nicht verfügbar ist, wodurch der anfordernde Bus-Master (20, 22) veranlaßt wird, die Kontrolle über den gemeinsamen Bus freizugeben, das Bereitstellen eines Bus-Arbiters, der so ausgebildet ist, daß er den Bus-Master-Zugriff auf den gemeinsamen Bus (12) steuern kann, das Identifizieren des ersten Bus-Masters (20, 22), der einen Zugriff auf die geteilte Ressource sucht, gegenüber dem Arbiter, das Erzeugen eines Besetzt-Signals, wenn erfaßt wird, daß die geteilte Ressource (28, 32) nicht verfügbar ist, und das Liefern des Besetzt-Signals an den Bus-Arbiter, und das Abhalten des ersten Bus-Masters (20, 22) am Teilnehmen an der Schiedsentscheidung zur Gewinnung der Kontrolle über den gemeinsamen Bus (12) durch den Arbiter, wenn die geteilte Ressource nicht verfügbar ist.

2. Ein Verfahren nach Anspruch 1, ferner umfassend den Schritt des Freigebens des ersten Bus-Masters (20, 22), damit dieser die Kontrolle über den gemeinsamen Bus (12) erlangen kann, bei Erlöschen des Besetzt-Signals.

3. Ein Computersystem mit einer Mehrzahl von Bus-Mastern (20, 22), die mit einem gemeinsamen Bus (12) verbunden sind, einem Bus-Arbiter, der so ausgebildet ist, daß er den Zugriff von Bus-Mastern auf den gemeinsamen Bus (12) kontrollieren kann, und einer geteilten Ressource (28, 32), die mit dem gemeinsamen Bus gekoppelt ist, dadurch gekennzeichnet, daß die geteilte Ressource (28, 32) Logikeinrichtungen (52) enthält, die so ausgebildet sind, daß sie ein Besetzt-Signal erzeugen, wenn die geteilte Ressource (28, 32) nicht verfügbar ist, wobei das so erzeugte Besetzt-Signal dem Bus-Arbiter zur Verfügung gestellt wird, und daß der Bus-Arbiter so ausgebildet ist, daß er die Bus-Master (20, 22), die den Zugriff auf die geteilte Ressource (28, 32) suchen, am Teilnehmen an der Schiedsentscheidung bezüglich der Gewinnung der Kontrolle über den gemeinsamen Bus (12) während des Empfangs des Besetzt-Signals hindert, und wobei die Logikeinrichtung (52) ferner so ausgebildet ist, daß sie ein Neuversuchssignal erzeugt, wenn die geteilte Ressource (28, 32) von dem Bus-Master (20, 22) adressiert wird, während die geteilte Ressource (28, 32) sich in einem Besetzt-Zustand befindet, wobei das Neuversuchssignal bewirkt, daß der Bus-Master (20, 22) die Kontrolle über den gemeinsamen Bus freigibt.

4. Ein Computersystem nach Anspruch 3, wobei die geteilte Ressource eine Schnittstellenschaltung (28) enthält, die mit einem weiteren Bus (32) gekoppelt ist.

## Revendications

1. Procédé d'optimisation de l'utilisation d'un bus commun (12) connectant une pluralité de bus pilotes (20, 22) avec une ressource partagée (28, 32), comprenant la détection de la disponibilité de ladite ressource partagée (28, 32), la génération d'un signal de réessai lorsqu'un premier bus de ladite pluralité de bus pilotes (20, 22) demande un accès à ladite ressource partagée (28, 32) tandis que ladite ressource partagée n'est pas disponible, la fourniture dudit signal de réessai audit premier bus pilote (20, 22) lorsque ladite ressource partagée (28, 32) n'est pas disponible, amenant ainsi le bus pilote (20, 22) demandeur à renoncer à la commande dudit bus commun, la prévision d'un moyen d'arbitrage de bus prévu pour commander l'accès du bus pilote audit bus commun (12), l'identification pour ledit moyen d'arbitrage dudit premier bus pilote (20, 22) recherchant un accès à ladite ressource partagée, la génération d'un signal d'occupation lorsque ladite ressource partagée (28, 32) est détectée comme indisponible et la fourniture dudit signal d'occupation audit moyen d'arbitrage de bus, et la mise à l'écart au moyen dudit moyen d'arbitrage dudit premier bus pilote (20, 22) de la participation dans la négociation pour la commande dudit bus commun (12) lorsque ladite ressource partagée n'est pas disponible.

2. Procédé selon la revendication 1, comprenant, de plus, une étape de validation dudit premier bus pilote (20, 22) pour obtenir la commande dudit bus commun (12) à la fin dudit signal d'occupation.

3. Système d'ordinateur comprenant une pluralité de bus pilotes (20, 22) connectés à un bus commun (12), un moyen d'arbitrage de bus prévu pour commander un accès du bus pilote audit bus commun (12) et à une ressource partagée (28, 32) couplée audit bus commun, caractérisé en ce que ladite ressource partagée (28, 32) comprend un moyen logique (52) prévu pour générer un signal d'occupation lorsque ladite ressource partagée (28, 32) n'est pas disponible, le signal d'occupation ainsi généré étant fourni audit moyen d'arbitrage de bus, et en ce que ledit moyen d'arbitrage de bus est prévu pour empêcher les bus pilotes (20, 22) recherchant un accès à ladite ressource partagée (28, 32) de participer à une négociation pour la commande dudit bus commun (12) lors de la réception dudit signal d'occupation, et dans lequel ledit moyen logique (52) est prévu, de plus, pour générer un signal de réessai lorsque ladite ressource partagée (28, 32) est adressée par le bus pilote (20, 22) lorsque ladite ressource partagée (28, 32) est dans un état occupé, ledit signal de réessai étant efficace pour amener ledit bus pilote (20, 22) à renoncer à la commande dudit bus commun.

4. Système d'ordinateur selon la revendication 3, dans lequel ladite ressource partagée comprend un circuit d'interface (28) coupé à un bus supplémentaire (32).
